(19) Europäisches Patentamt
European Patent Office
Office européen des brevets

(11) **EP 1 488 499 B1**

(12) **EUROPÄISCHE PATENTSCHRIFT**

(45) Veröffentlichungstag und Bekanntmachung des Hinweises auf die Patenterteilung:
**12.05.2010 Patentblatt 2010/19**

(21) Anmeldenummer: **03720388.2**

(22) Anmeldetag: **28.03.2003**

(51) Int Cl.:
***H02M 3/158*** (2006.01)

(86) Internationale Anmeldenummer:
**PCT/EP2003/003275**

(87) Internationale Veröffentlichungsnummer:
**WO 2003/084040 (09.10.2003 Gazette 2003/41)**

(54) **STROMVERSORGUNGSEINRICHTUNG MIT MEHREREN PARALLEL GESCHALTETEN SCHALTNETZTEILEN**

POWER SUPPLY DEVICE COMPRISING SEVERAL SWITCHED-MODE POWER SUPPLY UNITS THAT ARE CONNECTED IN PARALLEL

DISPOSITIF D'ALIMENTATION EN COURANT A PLUSIEURS BLOCS D'ALIMENTATION A DECOUPAGE MONTES EN PARALLELE

(84) Benannte Vertragsstaaten:
**FI GB IT**

(30) Priorität: **28.03.2002 DE 10214190**

(43) Veröffentlichungstag der Anmeldung:
**22.12.2004 Patentblatt 2004/52**

(73) Patentinhaber: **MINEBEA Co., Ltd.**
**Kitasaku-gun, Nagano-ken (JP)**

(72) Erfinder:
• **Hoffmann, Hans**
  **86159 Augsburg (DE)**
• **Rathmann, Robert**
  **86159 Augsburg (DE)**
• **Wiesmüller, David**
  **86159 Augsburg (DE)**

(74) Vertreter: **Liesegang, Eva**
**Forrester & Boehmert**
**Pettenkoferstraße 20-22**
**80336 München (DE)**

(56) Entgegenhaltungen:
**EP-A- 0 949 739     US-A- 4 816 739**

**Beschreibung**

Die Erfindung betrifft eine Stromversorgungseinrichtung mit mehreren parallel geschalteten Schaltnetzteilen zur Versorgung wenigstens eines Verbrauchers, wobei jedes Schaltnetzteil einen Ausgangsstrom und eine Ausgangsspannung erzeugt, und mit einer Ansteuervorrichtung für jedes Schaltnetzteil. Die Ansteuervorrichtung steuert die Ausgangsspannung des Schaltnetzteiles, die abhängig ist von dem Ausgangsstrom und einem Lastwiderstand.

Die Grundlagen parallel geschalteter Schaltnetzteile sind z. B. beschrieben in Elektronik, Band 13, 2000, Seiten 114-118 "Schaltnetzteile parallel geschaltet - technische Details zur passiven Stromaufteilung" von Martin Rosenbaum. Ziel der Parallelschaltung von Schaltnetzteilen ist die Leistungserhöhung mittels der Erhöhung des Ausgangsstroms sowie eine Verringerung der Ausfallrate durch Vorsehen redundanter Schaltnetzteile derart, daß eine defekte Stromversorgung während des Betriebs einer Einrichtung, die von den Schaltnetzteilen versorgt wird, ausgetauscht werden kann. Die Parallelschaltung läßt sich mit einer aktiven Stromaufteilung und mit einer passiven Stromaufteilung realisieren.

Die aktive Stromaufteilung mißt den Ausgangsstrom jedes Netzteils und regelt die Ausgangsspannungen abhängig vom Ausgangsstrom aller Schaltnetzteile so, daß sich eine gleichmäßige Stromaufteilung auf einen oder mehrere Verbraucher ergibt. Dieses Verfahren hat den Vorteil, daß eine genaue Stromaufteilung und eine gleichmäßige Belastung der parallel geschalteten Schaltnetzteile erreicht werden können. Als Nachteile wären der erhöhte schaltungstechnische Aufwand und die damit einhergehenden höheren Kosten anzusehen.

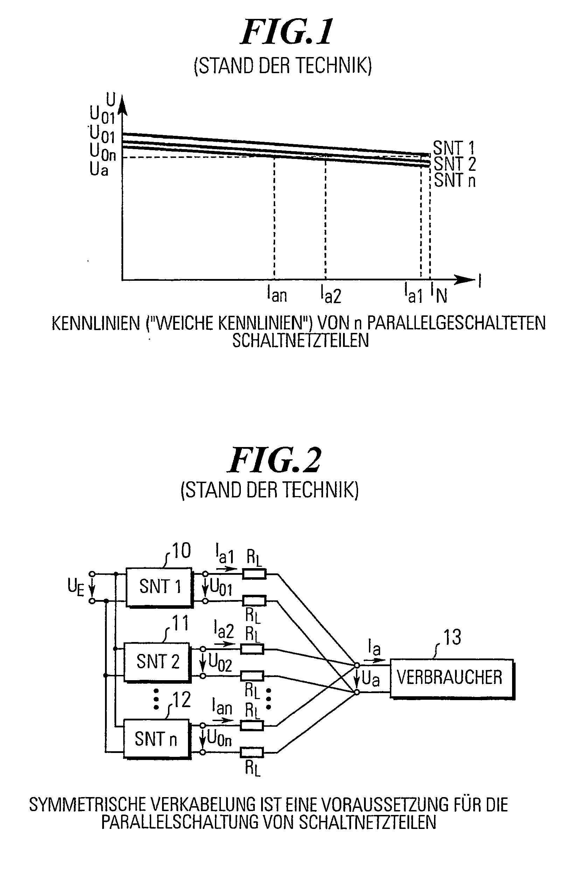

Bei der passiven Stromaufteilung wird durch Einstellung einer "weicher Ausgangskennlinie" des Schaltnetzteils, die z.B. in Figur 1 gezeigt ist, eine möglichst gleichmäßige Stromaufteilung realisiert. Vorteilhaft sind der geringere schaltungstechnische Aufwand und die nahezu unbegrenzte Anzahl der Schaltnetzteile, welche parallel geschaltet werden können. Ein Nachteil ist bei einigen Anwendungen die etwas ungenauere Stromaufteilung.

Figur 2 zeigt ein Blockdiagramm eines Beispiels für N parallel geschaltete Schaltnetzteile 10, 11, 12, die einen Verbraucher 13 versorgen. Weitere Einzelheiten der in Figur 2 gezeigten Schaltung sind in der oben genannten Veröffentlichung in Elektronik 13/2000 gezeigt und erläutert. Auf diese Veröffentlichung wird Bezug genommen.

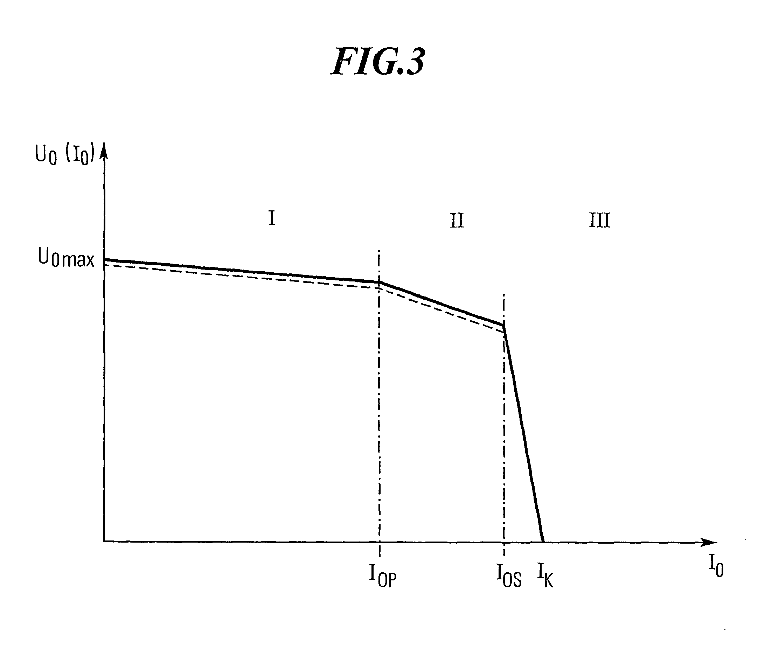

Um die Elusgangskennlinie der einzelnen, parallel geschalteten Schaltnetzteile nach Wunsch einzustellen, ist bei der passiven Stromaufteilung im Stand der Technik vorgesehen, einen oder mehrere Shunt-Widerstände in die Ausgangsleitung der jeweiligen Schaltnetzteile zu legen, so daß sich die Ausgangsspannung der jeweiligen Schaltnetzteile abhängig von der Belastung, innerhalb gewisser Toleranzen, gemäß vorgegebenen Kennlinien einstellt. Figur 3 zeigt ein Beispiel einer solchen Ausgangskennlinie eines einzelnen Schaltnetzteils, die drei Abschnitte aufweist, welche durch Vorsehen von drei geschalteten Shunt-Widerständen in der Ausgangsleitung des Schaltnetzteils eingestellt werden kann.

Die in Figur 3 gezeigte Ausgangskennlinie verläuft in einem ersten Bereich I, der den Normalbetrieb des Schaltnetzteils kennzeichnet, relativ flach, mit nur einer geringen Spannungsabnahme bei zunehmender Ausgangslast und somit zunehmendem Ausgangsstrom. In diesem Bereich I ist ein erster Shunt-Widerstand $R_{vs}$ aktiv, der auch durch den Leitungswiderstand gebildet werden könnte. Wenn der Ausgangsstrom $I_0$ über einen ersten Schwellwert $I_{0P}$ steigt, wird ein zweiter Shunt-Widerstand $R_P$ zugeschaltet, der bewirkt, daß die Spannung am Ausgang des Schaltnetzteils stärker abfällt. Dieser zweite Bereich, der mit II bezeichnet ist, kann beispielsweise ein Ladebetriebsbereich sein, in dem die Netzteile nicht nur einen Verbraucher versorgen, sondern zusätzlich auch Batterien oder andere Energiespeicher laden, die bei einem Stromausfall als Not-Energieversorgung zum Versorgen der Verbraucher vorgesehen sind.

Wenn der Ausgangsstrom $I_0$ des jeweiligen Schaltnetzteils einen weiteren Schwellwert $I_{0S}$ überschreitet, wird ein dritter Shunt-Widerstand aktiviert, der so dimensioniert ist, daß die Spannungs-Ausgangskennlinie des Schaltnetzteils abrupt abfällt. Dieser Bereich, der mit III bezeichnet ist, kann als ein Schutz-Abschaltbereich betrachtet werden, in dem das Schaltnetzteil bei Überschreiten eines bestimmten Grenzstroms $I_{0S}$ kurz geschlossen und abgeschaltet wird. Der dritte Shunt-Widerstand ist mit $R_S$ bezeichnet.

Während die beschriebene Lösung des Standes der Technik zum Einstellen der Ausgangskennlinie der Schaltnetzteile abhängig von dem Ausgangsstrom schaltungstechnisch einfach ist und verschiedene Betriebsbereiche der Ausgangskennlinie ermöglicht, erzeugen die Shunt-Widerstände, die in der Stromversorgung oder außerhalb davon in der Ausgangsleitung des Schaltnetzteils (s.$R_L$ in Fig. 2) liegen können, erhebliche Verluste und reduzieren somit den Gesamtwirkungsgrad der Stromversorgung bzw. des Systems.

Die Druckschrift EP 949 739 A2 offenbart eine Stromversorgungsvorrichtung mit einzelnen anwählbaren Spannungsreglern, die abhängig von der Last die Ausgangsspannung vorsehen. Die Ausgänge der Spannungsregler werden entweder direkt elektrisch zusammengeschaltet oder über eine Umschaltevorrichtung einzeln ausgewählt. In dieser Druckschrift werden folglich die einzelnen Leistungs-Ausgangssignale der jeweiligen Spannungsregler miteinander kombiniert.

Der Erfindung liegt die Aufgabe zu Grunde, eine Stromversorgungseinrichtung mit mehreren parallel geschalteten Schaltnetzteilen zur Versorgung wenigstens eines Verbrauchers anzugeben, die mit einer passiven Stromaufteilung arbeitet und eine Einstellung der Ausgangskennlinie jedes Schaltnetzteils für unterschiedliche Betriebsbereiche erlaubt. Diese Aufgabe wird durch eine Stromversorgungseinrichtung mit den Merkmalen von Anspruch 1 gelöst.

Die Erfindung schlägt eine Stromversorgungseinrichtung mit mehreren parallel geschalteten Schaltnetzteilen zur Versorgung wenigstens eines Verbrauchers vor, in der jedes Schaltnetzteil einen Ausgangsstrom $I_0$ und eine Ausgangsspannung $U_0(I_0, R_L)$, die abhängig ist von dem Ausgangsstrom $I_0$ und einem zugehörigen Lastwiderstand $R_L$, erzeugt. Für jedes Schaltnetzteil ist eine Ansteuervorrichtung vorgesehen. Erfindungsgemäß ist die Ansteuervorrichtung in drei Stufen aufgeteilt, um eine Ausgangsspannungskennlinie des jeweiligen Schaltnetzteils mit drei Betriebsbereichen zu erzeugen. Diese drei Betriebsbereiche sind vorzugsweise gekennzeichnet durch eine Ausgangskennlinie des Schaltnetzteils, die mit zunehmender Belastung und somit zunehmendem Ausgangsstrom steiler abfällt, wie z. B. in Figur 3 gezeigt.

Die erste Stufe weist ein P-Glied auf, das eine P-Glied-Eingangsspannung empfängt, die von der Ausgangsspannung $U_0(I_0, R_L)$ abgeleitet ist, und eine P-Glied-Steuerspannung $U_{VS}$ erzeugt, die zur Ansteuerung des jeweiligen Schaltnetzteils dient. Das P-Glied erzeugt eine geringfügig abfallende Ausgangskennlinie, die in ihrer Höhe vorzugsweise einstellbar ist. Die erste Stufe ist in einem Normalbetriebsbereich bis zu einem ersten Grenzwert $I_{0P}$ des Ausgangsstroms $I_0$ aktiv und kann bei Überschreiten des ersten Grenzwertes $I_{0P}$ deaktiviert werden.

Die zweite Stufe weist eine Stromabbildungsschaltung auf, die den Ausgangsstrom $I_0$ des jeweiligen Schaltnetzteils nachbildet und eine Ausgangsstrom-Steuerspannung Up erzeugt, die zur Ansteuerung des jeweiligen Schaltnetzteils dient. Die Ausgangsstrom-Steuerspannung $U_P$ ist direkt proportional zum Ausgangsstrom $I_0$ und wird vorzugsweise so eingestellt, daß sich eine stärker abfallende Ausgangskennlinie des Schaltnetzteils ergibt. Die zweite Stufe wird aktiv, wenn der Ausgangsstrom $I_0$ den ersten Grenzwert $I_{0P}$ überschreitet, der beispielsweise so gewählt wird, daß er ein Verlassen des Normalbetriebs und einen Übergang zu einem Ladebetrieb des Schaltnetzteils kennzeichnet, wie oben mit Bezug auf Figur 3 beschrieben.

Die dritte Stufe weist eine Verstärkerschaltung auf, die ein zum Ausgangsstrom $I_0$ proportionales Signal verstärkt und eine verstärkte Ausgangsstrom-Steuerspannung $U_S$ erzeugt, die zur Ansteuerung des jeweiligen Schaltnetzteils dient. Vorzugsweise ist die dritte Stufe der zweiten Stufe nachgeschaltet und verwendet die Ausgangsstrom-Steuerspannung $U_P$ als Eingangssignal. Die Verstärkung der dritten Stufe ist vorzugsweise so eingestellt, daß sich eine steil abfallende Ausgangskennlinie des Schaltnetzteils ergibt. Die dritte Stufe ist aktiv, wenn der Ausgangsstrom $I_0$ einen zweiten Grenzwert $I_{0S}$ übersteigt, der beispielsweise eine Überlastbedingung anzeigt, die ein Abschalten des Schaltnetzteils notwendig macht.

Mit der erfindungsgemäßen Stromversorgungseinrichtung ist es möglich, die Ausgangskennlinie eines Schaltnetzteils nach Vorgaben in mehreren unterschiedlichen Betriebsbereichen einzustellen, wobei die Einstellung durch Verwendung des P-Glieds, der Stromabbildungsschaltung und der Verstärkerschaltung weitgehend verlustlos ist und dennoch ein geringerer Schaltungsaufwand notwendig ist als bei einer aktiven Stromaufteilung, welche darauf basiert, die Ausgangsströme aller Schaltnetzteile zu messen und abhängig von den Messungen aller Schaltnetzteile eine Regelung durchzuführen.

Erfindungsgemäß werden die Arbeitsbereiche, in denen die erste, zweite bzw. dritte Stufe aktiv sind, abhängig vom Ausgangsstrom $I_0$ gesteuert. Die Bereiche sind in Fig. 3 mit I, II, III gekennzeichnet. Liegt $I_0$ im Bereich I, so ist nur die erste Stufe aktiv; liegt $I_0$ im Bereich II, so ist die zweite Stufe aktiv, das P-Glied der ersten Stufe zieht die Ausgangsspannung dieser ersten Stufe auf null, wie unten genauer beschrieben ist, so daß die erste Stufe keinen Einfluß mehr hat. Liegt der Ausgangsstrom $I_0$ im Bereich III, bleibt die zweite Stufe zwar aktiv, wird jedoch durch den wesentlich höheren Verstärkungsfaktor der dritten Stufe dominiert, so daß der Beitrag der zweiten Stufe zur Steuerspannung weitgehend vernachlässigbar ist, wie weiter unten genauer beschrieben.

Die Ansteuervorrichtung umfaßt vorzugsweise einen Pulsweitenmodulator-Baustein mit integriertem Koppelverstärker, welcher die P-Glied-Steuerspannung $U_{vs}$, die Ausgangsstrom-Steuerspannung $U_P$ und die verstärkte Ausgangsstrom-Steuerspannung $mU_S$ empfängt und ein Steuersignal $V_T$ für das jeweilige Schaltnetzteil abhängig von deisen Steuerspannungen erzeugt. Der Pulsweitenmodulator-Baustein empfängt abhängig davon, welche Stufen aktiviert sind, die P-Glied-Steuerspannung $U_{vs}$, die Ausgangsstrom-Steuerspannung $U_P$ und/oder die verstärkten Ausgangsstrom-Steuerspannung $mU_S$.

Bei einer bevorzugten Ausführungsform umfaßt die erste Stufe einen Spannungsteiler, der die Größe der Ausgangsspannung $U_0$ festlegt und eine zur Ausgangsspannung $U_0$ proportionale P-Glied-Eingangsspannung erzeugt. Zusätzlich kann über eine gesteuerte Stromquelle, die mit dem Spannungsteiler verbunden ist, die Ausgangskennlinie des Schaltnetzteiles verschoben werden, wie weiter unten näher erläutert ist.

Vorzugsweise weist das P-Glied der ersten Stufe einen Operationsverstärker auf, dessen einer Eingang die P-Glied-Eingangsspannung empfängt und dessen anderer Eingang eine erste Bezugsspannung $U_{refl}$ empfängt und dessen Ausgang die P-Glied-Steuerspannung $U_{vs}$ abgibt. Der Operationsverstärker ist vorteilhaft über eine Sperrdiode mit dem Pulsweitenmodulations-Baustein verbunden.

Die Stromabbildungsschaltung der zweiten Stufe weist vorzugsweise ein Übertragerelement auf, das zu einem Haupt-Übertragerelement des jeweiligen Schaltnetzteils parallel geschaltet ist und ein -Ausgangssignal erzeugt, das proportional zu dem Ausgangsstrom $I_0$ des Schaltnetzteils ist. Dies ist mit Bezug auf die Figuren näher erläutert.

Die Verstärkerschaltung der dritten Stufe ist vorzugsweise mit einem Operationsverstärker realisiert, dessen einer Eingang mit der Stromabbildungsschaltung der zweiten Stufe verbunden ist und dessen anderer Eingang mit einer Bezugsspannung verbunden ist und dessen Ausgang die verstärkte Ausgangsstrom-Steuerspannung abgibt.

Aus der DE 100 19 329 ist eine Stromversorgung mit mehreren parallel geschalteten Schaltnetzteilen bekannt, welche zur Erzeugung einer Ausgangskennlinie in mehreren Abschnitten geregelt wird. Ein erster Teilabschnitt der Kennlinie weist eine konstante Ausgangsspannung auf, ein zweiter Teilabschnitt entspricht einer Gerade mit abfallender Steigung, und ein dritter Teilabschnitt sieht eine Kurzschlußstrombegrenzung vor. In der ersten Stufe verwendet die DE 100 19 329 zur Regelung des Stroms ein I-Glied zur Erzeugung einer konstanten Ausgangsspannung - anders als in dem Betriebsbereich I gemäß der Erfindung. Die Schaltung des Standes der Technik würde jedoch mit einem reinen P-Glied nicht funktionieren. Ein Grund ist, daß die Stromerfassung in der DE 100 19 329 maßgeblich auf der Verwendung eines Optokopplers beruht. Die Optokoppler-Verstärkung bzw. -Dämpfung geht maßgeblich in die Kreisverstärkung ein, welche die Kennlinienneigung bestimmt. Die Optokoppler-Verstärkung ist jedoch nicht linear und stark temperaturabhängig; sie ist auch abhängig von den jeweiligen Toleranzen der konkret verwendeten Bauteile. Bei mehreren parallel geschalteten Schaltnetzteilen eignet sich daher die Lösung der DE 100 19 329 nicht zur Erzeugung gleicher, reproduzierbarer Kennlinien, weil jedes Schaltnetzteil durch Verwendung unterschiedlicher Optokoppler eine abweichende, nicht vorhersehbare Kennlinie erzeugen wird und somit keine definierte Stromaufteilung möglich ist. Ferner erzeugt der Optokoppler Nichtlinearitäten, die durch eine entsprechend hohe Verstärkung ausgeglichen werden müssen.

Ein Vorteil der Verwendung eines P-Glieds gemäß der Erfindung ist, daß stromabhängige Kennlinien erzeugt werden können, anders als im Teilbereich 1 der DE 100 19 329, und daß die Geradengleichungen einfacher einstellbar sind. Dies ist wichtig für die Lastaufteilung bei mehreren parallel betriebenen Netzteilen.

Ein weiterer, sehr wichtiger Unterschied der Erfindung zu der DE 100 19 329 besteht darin, daß die DE 100 19 329, wie der oben beschriebenen Stand der Technik, mit einem Widerstandsshunt im Ausgangszweig arbeitet. Die Ausgangskennlinie wird maßgeblich durch den Widerstandsshunt eingestellt, und der gesamte Ausgangsstrom geht über diesen Shunt. Dadurch entstehen erhebliche Verluste. Ferner ist die Einstellung der Kennlinie weniger flexibel als bei der Erfindung.

Die Erfindung kommt dagegen ohne ohmsche Verbraucher zur Einstellung der Kennlinie im Ausgangszweig aus, wobei beliebige Kurvengleichungen eingestellt werden können. Gleichwohl kann die Erfindung eine Kurzschlußstrombegrenzung realisieren.

Die Erfindung ist im folgenden anhand bevorzugter Ausführungsformen mit Bezug auf die Zeichnungen näher erläutert. In den Figuren zeigt:

Figur 1 ein Diagramm mit drei Ausgangskennlinien von drei parallel geschalteten Schaltnetzteilen gemäß dem Stand der Technik;

Figur 2 zeigt in Form eines Blockdiagramms die Parallelschaltung mehrerer Schalt- netzteile zur Versorgung eines Verbrauchers gemäß dem Stand der Technik;

Figur 3 zeigt das Diagramm einer Ausgangskennlinie eines Schaltnetzteils, die erfin- dungsgemäß eingestellt werden soll;

Figur 4 zeigt ein Schaltbild einer Stromversorgungseinrichtung mit einer Ansteuervor- richtung gemäß der Erfindung, wobei in Figur 4 nur die Ausgangsstufe eines Schaltnetzteils schematisch dargestellt ist;

Figur 5 zeigt ein Schaltbild der Eingangsstufe eines Schaltnetzteiles gemäß dem Stand der Technik, die in Verbindung mit der Erfindung eingesetzt werden könnte;

Figur 6 zeigt ein schematisches Blockdiagramm einer Stromversorgungseinrichtung gemäß der Erfindung zur Versorgung mehrerer Verbraucher.

Figur 1, die bereits beschrieben wurde, zeigt ein Diagramm mit drei sogenannten weichen Kerinlinien von drei parallel geschalteten Schaltnetzteilen mit passiver Stromaufteilung gemäß dem Stand der Technik. Ein Beispiel für drei bzw. n parallel geschaltete Schaltnetzteile gemäß dem Stand der Technik ist in Figur 2 gezeigt. Figur 2 zeigt ein erstes Schaltnetzteil 10, ein zweites Schaltnetzteil 11, und ein n-tes Schaltnetzteil 12, die parallel geschaltet und symmetrisch mit einem Verbraucher 13 verkabelt sind. Die Leitungswiderstände der Verkabelung sind schematisch durch die Widerstände $R_L$ dargestellt. Bei der in Figur 2 gezeigten Anordnung entsprechen die Leitungswiderstände $R_L$ dem ersten Shunt-Widerstand zur Einstellung der Ausgangskennlinie jedes Schaltnetzteils 10, 11, 12, wobei im Stand der Technik ein zusätzlicher Shunt-Widerstand vorgesehen werden muß, um eine genaue Stromaufteilung zu erreichen. Diese Lösung ist jedoch unflexibel und führt zu zusätzlichen Verlusten am Shunt-Widerstand.

Figur 3, die bereits beschrieben wurde, zeigt eine Ausgangskennlinie eines Schaltnetzteils mit drei Betriebsbereichen, die von der erfindungsgemäßen Stromerzeugungseinrichtung erzeugt werden soll. Übertragen auf die schematische Darstellung der Figur 2 ist die Aufgabe der Erfindung, daß jedes der Schaltnetzteile 10, 11, 12 beispielsweise eine Ausgangskennlinie gemäß Figur 3 oder eine andere, einstellbare Ausgangskennlinie erzeugt, ohne daß verlustbehaftete Shunt-Widerstände benötigt werden. Figur 3 zeigt einen ersten Betriebsbereich I, der den Normalbetrieb der Stromversorgungseinrichtung kennzeichnet und bei einem ersten Grenzstrom $I_{0P}$ endet, einen zweiten Betriebsbereich II, der den Ladebetrieb der erfindungsgemäßen Stromversorgungseinrichtung kennzeichnet und bei einem zweiten Grenzstrom $I_{0S}$ endet, und einen dritten Betriebsbereich III, der den Abschaltbereich der erfmdungsgemäßen Stromversorgungseinrichtung kennzeichnet, wobei die Stromversorgungseinrichtung bei einem Kurzschlußstrom $I_K$ vollständig abschaltet.

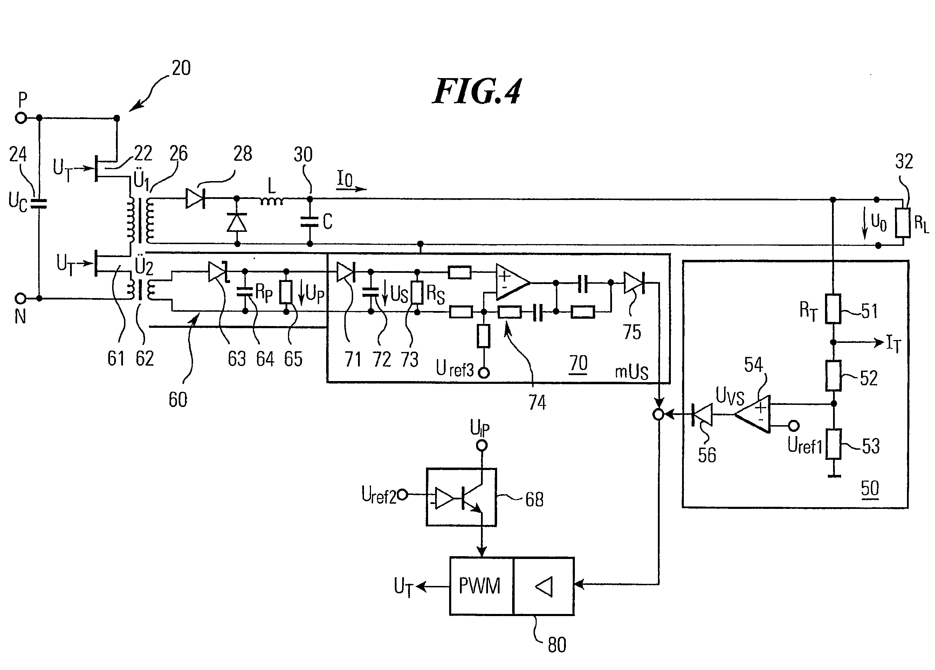

Figur 4 zeigt einen schematischen Schaltplan der erfindungsgemäßen Stromversorgungseinrichtung, wobei in Figur 4 nur die Ausgangsstufe eines Schaltnetzteils und die zugehörige Ansteuervorrichtung schematisch dargestellt sind.

Figur 4 zeigt schematisch die Ausgangsstufe eines Schaltnetzteils 20, mit einem steuerbaren elektronischen Schalter 22, der bei der gezeigten Ausführungsform einen MOS-FET aufweist, jedoch auch als ein IGBT oder jeder andere geeignete Transistorschalter realisiert sein kann, und einem Speicherkondensator 24 sowie einem Ausgangs-Übertrager 26. Dem Ausgangs-Übertrager 26 sind eine Ausgangs/Freilaufdiode 28 und ein LC-Schaltkreis 30, welche die zerhackte Ausgangsspannung des Transistorschalters 22 und Übertragers 26 gleichrichten, nachgeschaltet. Der Ausgangsstrom des Schaltnetzteils 20, das in Figur 4 nur schematisch dargestellt ist, ist mit $I_0$ bezeichnet, und die Ausgangsspannung ist mit $U_0$ bezeichnet. Am Ausgang des Schaltnetzteils 20 ist in Figur 4 ein Lastwiderstand $R_L$ 32 stellvertretend für einen oder mehrere Verbraucher dargestellt. Die Ausgangsstufe des Schaltnetzteils 20 umfaßt bei der Ausführungsform der Fig. 4 ferner einen zweiten steuerbaren elektronischen Schalter 61, der mit dem ersten Schalter 22 im Gleichtakt angesteuert wird.

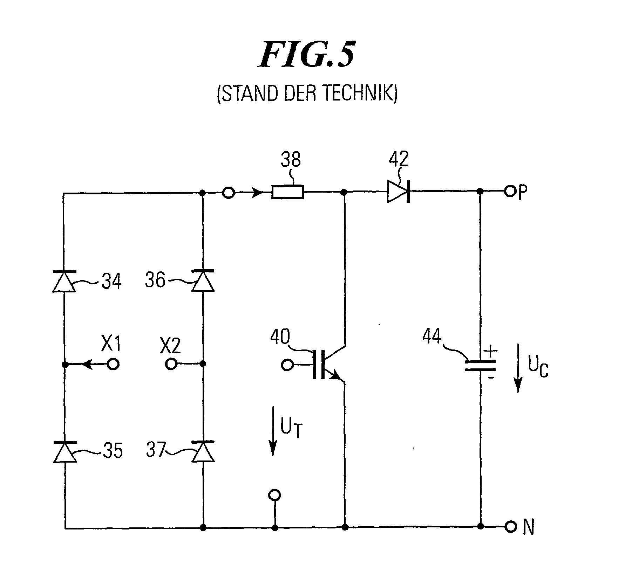

Figur 5 zeigt zur Erläuterung ein Beispiel einer Eingangsstufe des Schaltnetzteils gemäß dem Stand der Technik, welche der in Fig. 4 gezeigten Ausgangsstufe vorgeschaltet sein kann. Diese Eingangsstufe eines Schaltnetzteils dient jedoch lediglich als ein Beispiel, da die Erfmdung mit jeder Art von Schaltnetzteil realisiert werden kann. Das Schaltnetzteil der Figur 5 umfaßt insbesondere einen Eingangsgleichrichter aus vier Gleichrichterdioden 34, 35, 36, 37, die in Form einer Brückenschaltung angeordnet sind. Die Gleichrichterbrücke erhält ihre Eingangs-Wechselspannung, insbesondere eine Netzspannung, an den Anschlüssen X1, X2 und gibt ihre gleichgerichtete Ausgangsspannung über eine Speicher- und Glättungsdrossel 38, die nur in eine Richtung von einem Strom durchflossen wird, an einen steuerbaren elektronischen Schalter 40 ab, der über dem Ausgang des Brückengleichrichters angeschlossen ist. Der Transistorschalter 40 empfängt eine Steuerspannung $U_i$, die in Fig. 5 nicht näher spezifiziert ist und die Ausgangsspannung des Schaltnetzteils bestimmt. Dem Transistor

schalter 40 ist eine Ausgangs/Freilaufdiode 42 zugeordnet, welche die zerhackte Ausgangsspannung des Transistorschalters gleichrichtet. Am Ausgang des Schaltnetzteils ist ein unipolarer Speicherkondensator 44 zur Speicherung und Glättung der Ausgangsspannung angeschlossen.

Nach einem bekannten Steuerverfahren wird der steuerbare elektronische Schalter 40, bzw. 22, 61 in Figur 4 mit einer im Verhältnis zur Netzfrequenz der Wechselspannungsversorgung (an den Anschlüssen X1, X2) hohen Schaltfrequenz $U_T$ betrieben. Durch die Veränderung der relativen Einschaltdauer des elektronischen Schalters 40 bzw. 22, 61 ist es möglich, die Ausgangsspannung $U_C$ an dem Kondensator 44 bzw. 24 und somit die Ausgangsspannung des Schaltnetzteils $U_0$ einzustellen.

Wieder mit Bezug auf Figur 4 wird nun beschrieben, wie die Steuerspannung $U_T$ durch die dreistufige Ansteuervorrichtung gemäß der Erfindung bestimmt wird. Die erste Stufe der erfindungsgemäßen Ansteuerschaltung ist in Figur 4 in einem mit 50 bezeichneten Kasten dargestellt, die zweite Stufe ist in einem mit 60 bezeichneten Kasten dargestellt, und die dritte Stufe ist in einem mit 70 bezeichneten Kasten dargestellt.

Die erste Stufe 50 der Ansteuerschaltung umfaßt einen Spannungsteiler bestehend aus Widerständen 51, 52, 53, ein P-Glied, das durch einen Operationsvertärker 54 gebildet wird, und eine Sperrdiode 56. Diese Bauteile sind wie in Figur 4 gezeigt miteinander verbunden. Über den Spannungsteiler 51, 52, 53 und eine wählbare, konstante erste Bezugsspannung $U_{REF1}$ kann die Ausgangsspannung $U_{0MAX}$ eingestellt werden.

Der Spannungsteiler 51, 52, 53 ist so dimensioniert, daß bei der gewünschten Ausgangsspannung $U_0$ am Anschluß zwischen den Widerständen 52 und 53 eine Spannung erzeugt wird, die im wesentlichen der ersten Bezugsspannung $U_{REF1}$ entspricht. Demgemäß erzeugt das P-Glied 54 eine P-Glied-Steuerspannung $U_{vs}$, die über die Diode 56 an einen Pulsweitenmodulations-Baustein 80 angelegt wird, um das Schaltnetzteil 20 so anzusteuern, daß sich die (aufgrund der Wirkung des P-Gliedes) gering abfallende Ausgangskennlinie im Bereich I der Fig. 3 ergibt.

Bei einer bevorzugten Ausführungsform der Erfindung, die in Fig. 4 gezeigt ist, kann für die Einstellung von $U_{0MAX}$ eine Stromsenke 58 vorgesehen werden, um so nach Bedarf ein Kennlinienfeld zu erzeugen. Eine zweite Kennlinie mit einem geringfügig nach unten verschobenen $U_{0MAX}$ ist in Fig. 3 beispielsweise gestrichelt dargestellt. Hierzu ist der Spannungsteiler in die Widerstände 51 ($R_T$) und 52 aufgeteilt, und eine gesteuerte Stromquelle oder Stromsenke 58 ist an dem Verbindungspunkt zwischen den Widerständen 51 und 52 angeschlossen. Die Stromsenke 58 zieht einen konstanten Strom $I_T$ über den Widerstand 51 ($R_T$), so daß über dem Widerstand 51 eine zusätzliche konstante, einstellbare Spannung abfällt, welche die Ausgangskennlinie des Schaltnetzteils nach Wunsch verschiebt.

Das Ausgangssignal $U_{vs}$ des P-Gliedes 54 wird an den Pulsweitenmodulations-Baustein 80, mit integriertem Koppelverstärker, angelegt, der das Steuersignal $U_T$ für das Schaltnetzteil 20 erzeugt.

Solange der Ausgangsstrom $I_0$ des Schaltnetzteils 20 unter einem vorgegebenen ersten Grenzwert $I_{0P}$ liegt, der das Ende eines Normalbetriebsbereichs I kennzeichnet, liefern die zweite Stufe 60 und die dritte Stufe 70 keine Ausgangssignale. Die Ausgangsspannung des Schaltnetzteils 20 ergibt sich dann zu:

$$U_0(I_0) = U_{0MAX} - R_{VS*}I_0 - R_T * I_T,$$

wobei

$$R_{VS} = \frac{R_{Leistungsverluste}}{Kreisverstärkung}$$

Wenn der Ausgangsstrom $I_0$ den ersten Grenzwert $I_{0P}$ überschreitet, wird bei der gezeigten Ausführungsform die zweite Stufe 60 aktiviert. Die zweite Stufe 60 ist in dem Bereich II aktiv, wobei in diesem Bereich die Ausgangsspannung $U_0$ kleiner ist als die erste Bezugsspannung $U_{REF1}$, so daß das P-Glied 54 der ersten Stufe einen hochohmigen Ausgang hat und die erste Stufe 50 dadurch für die Einstellung des Steuersignals $U_T$ keinen Beitrag mehr leistet.

Die zweite Stufe 60 der Ansteuervorrichtung umfaßt einen Übertrager 62, eine Zenerdiode 63, einen Kondensator 64 und einen Widerstand $R_P$ 65, die wie in Figur 4 gezeigt miteinander verbunden sind. Der Übertrager 62 wird durch den elektronischen Schalter 61 angesteuert.

Das Ansteuersignal $U_T$ wird parallel an die beiden elektronischen Schalter 22, 61 angelegt, so daß diese im Gleichtakt geschaltet werden. Der Primärstrom des Schaltnetzteils, der durch die Schalter 22, 61 und durch den Übertrager 62 fließt, entspricht exakt dem Sekundärstrom durch die Dioden 28, multipliziert mit $ü_1$. Der Übertrager 62 dividiert den Primärstrom durch $Ü_2$. Somit entspricht der Ausgangsstom durch den zweiten Übertrager 62 einem genauen Abbild des Ausgangsstroms $I_0$ des Haupt-Übertragers 26, dividiert durch ($ü_1 \cdot ü_2$). Der Spannungsabfall über dem Widerstand $R_P$ 65 ist somit ein Maß für den Ausgangsstrom $I_P$, gemäß der folgenden Gleichung:

$$U_P = \frac{I_0 \cdot R_P}{Ü_1 \cdot Ü_2}$$

Mit Hilfe des zweiten Übertragers 62 kann somit ohne nennenswerte Strombelastung des Schaltnetzteils ein Abbild des Ausgangsstroms $I_0$ erzeugt werden. Die Ausgangsspannung $U_P$ der zweiten Stufe 60 wird über einen gesteuerten Schalter 68 an den Pulsweitenmodulations-Baustein 80 angelegt. Der gesteuerte Schalter 68, der in Fig. 4 durch einen Vergleicher und einen Transistorschalter schematisch dargestellt ist, empfängt an einem Steuereingang eine zweite Bezugsspannung $U_{REF2}$, die so gewählt ist, daß das Ausgangssignal $U_P$ der zweiten Stufe erst dann auf den Pulsweitenmodulations-Baustein 80 aufgeschaltet wird, wenn der Ausgangsstrom $I_0$ den zweiten Grenzwert $I_{0P}$ überschreitet. Hierzu wird $U_{REF2}$ wie folgt eingestellt:

$$U_{REF2} = \frac{I_{0P} \cdot R_P}{Ü_1 \cdot Ü_2}$$

Die Ausgangsspannung $U_P$ der zweiten Stufe 60 wird an den Pulsweitenmodulations-Baustein 80 wie beschrieben angelegt, um den Pulsweitenmodulations-Baustein 80 anzusteuern und ein gewünschtes Steuersignal $U_T$ für das Schaltnetzteil zu erzeugen.

Die Ausgangsspannung $U_0$ des Schaltnetzteils 20 ergibt sich bei Aktivierung der zweiten Stufe 60 zu:

$$U_0(I_0) = U_0(I_{0P}) - k * R_P * I_0$$

wobei

$$k = \frac{1}{Ü_1 \cdot Ü_2}$$

Es ist ersichtlich, daß durch geeignete Wahl von $R_P$ die Steigung der Ausgangskennlinie des Schaltnetzteils 22 beeinflußt werden kann. Da die Kennlinie nur mit Hilfe der Stromabbildung eingestellt wird, muß kein zusätzlicher Widerstand in den eigentlichen Ausgangskreis des Schaltnetzteils eingefügt werden, so daß die Verluste minimal gehalten werden können.

Wenn schließlich der Ausgangsstrom $I_0$ einen zweiten Grenzwert $I_{0S}$ überschreitet, wird die dritte Stufe 70 der Ansteuerschaltung aktiviert. Die Aktivierung der dritten Stufe 70 kann über eine dritte Bezugsspannung $U_{REF3}$ eingestellt werden, wobei

$$U_{REF3} = \frac{I_{0S} \cdot R_P}{Ü_1 \cdot Ü_2}$$

Die dritte Stufe 70 der Ansteuerschaltung umfaßt eine Eingangsdiode 71 und einen Kondensator 72, die einen Eingangsgleichrichter bilden, sowie eine Verstärkungsschaltung, die insgesamt mit 74 bezeichnet ist und neben anderen Widerständen und Kondensatoren einen Eingangswiderstand $R_S$ 73 aufweist, sowie eine Ausgangsdiode 75, die wie in Fig. 4 gezeigt miteinander verbunden sind. Die dritte Stufe 70 der Ansteuervorrichtung empfängt als Eingangssignal das Ausgangssignal $U_P$ der zweiten Stufe 60, das proportional zu dem Ausgangsstrom $I_0$ des Schaltnetzteils 20 ist. $U_P$ ist ein abhängig von den Steuersignalen $U_T$ gepulstes Signal. Dieses gepulste Signal $U_P$ wird von dem Gleichrichterteil 71, 72 der dritten Stufe 70 gleichgerichtet, so daß an dem Eingangswiderstand $R_S$ 73 des Verstärkerteils 74 der dritten Stufe eine gleichgerichtete Spannung $U_S$ anliegt, deren Amplitude der Spannung $U_P$ entspricht. Die dritte Stufe 70 erzeugt ein Steuersignal $U_S = U_P$ (gleichgerichtet) $= k \cdot R_P \cdot I_0$, welches durch die Verstärkerschaltung 74 verstärkt wird. Die Verstärkerschaltung 74 ist so ausgelegt, daß sie einen relativ hohen Verstärkungsfaktor, $m \gg 1$, hat. Es ergibt sich ein Ausgangssignal $m \cdot U_S$.

Das Ausgangssignal $mU_S$ der dritten Stufe 70 wird in den Pulsweitenmodulations-Baustein 80 eingegeben, um das Steuersignal $U_T$ zu erzeugen, daß eine steile Ausgangskennlinie $U_0$ des Schaltnetzteils 20 erzeugt, die bei einem Kurzschlußstrom $I_K$ zu 0 wird (s. Bereich III in Fig. 3). Die Ausgangskennlinie $U_0$ des Schaltnetzteils 20 ergibt sich im Bereich $I_{0S} < I_0 < I_K$ zu:

$$U_0(I_0) = U_0(I_{0S}) - k * m * R_P * I_0$$

Die erfindungsgemäße Stromversorgungseinrichtung findet Anwendung in allen Systemen, in denen redundante Schaltnetzteile zur Sicherung bei Netzausfall oder dergleichen benötigt werden. Insbesondere kann die Erfindung eingesetzt werden in Telekommunikationsanlagen, Computersystemen und jeglichen anderen Steuer- und Kommunikationssystemen, welche eine ausfallsichere Energieversorgung benötigen. Zusätzlich zu den an die Netzteilen angeschlossenen Verbraucher können auch Batterien angeschlossen werden, die bei Stromausfall die Energieversorgung übernehmen. Die erfindungsgemäße Stromversorgungseinrichtung sieht daher in ihrer Ausgangskennlinie einen Betriebsbereich für den Normalbetrieb, einen Betriebsbereich für den Ladebetrieb bei höherer Belastung und einen Betriebsbereich für das Abschalten bei Überlastung vor.

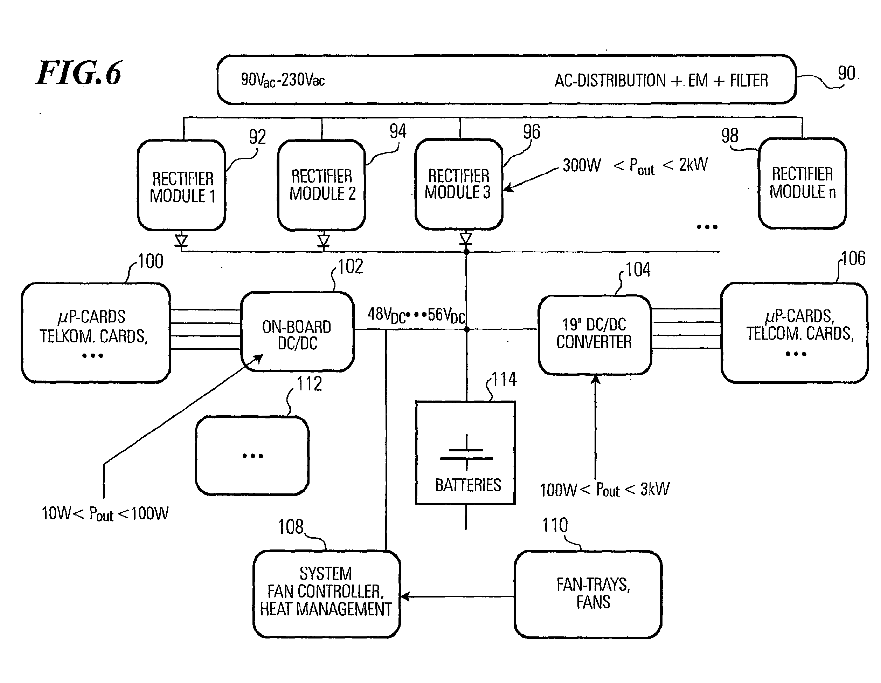

Figur 6 zeigt ein Beispiel für eine Umgebung, in der die erfindungsgemäße Stromversorgungseinrichtung eingesetzt werden kann. In Figur 6 ist ein Stromnetz allgemein mit 90 bezeichnet, wobei das Stromnetz 90 eine Wechselspannung im Bereich von 90 bis 230 Volt bereitstellen kann und eine Einrichtung für die Verteilung der Wechselspannung auf mehrere Schaltnetzteile sowie die nötigen netzseitigen Funk- und Störfilter und weitere benötigte Filtereinrichtungen aufweist. Das Netz 90 versorgt <u>n</u> Schaltnetzteile 92, 94, 96, 98, die in Figur 6 mit Rectifier Module bezeichnet sind. Die Schaltnetzteile 92-98 sollen bei dem gezeigten Ausführungsbeispiel einer Ausgangsleistung POUT zwischen 300 W und 2 kW bereitstellen können. Jedem Schaltnetzteil der Figur 6 ist eine Ansteuervorrichtung zugeordnet, wie sie mit Bezug auf Figur 4 beschrieben wurde, um eine gewünschte Ausgangs-Kennlinie einzustellen, wobei die Ansteuervorrichtung in Figur 6 nicht dargestellt sind. Die Schaltnetzteile 92-98 sind über eine gemeinsame Leitung mit mehreren Verbrauchern 100-112 sowie mit Batterien 114 verbunden, die alle mit einer Spannung im Bereich von 48 Volt Gleichspannung bis 56 Gleichspannung arbeiten und verschiedene Leistungsanforderungen haben können, wobei beispielhaft Leistungsbereiche $P_{OUT}$ von 10 Watt bis 100 Watt und von 100 W bis 300 kW angegeben sind. Die Verbraucher 100-112 können Mikroprozessorkarten, Telekommunikationskarten, Gleichstromwandler auf Karten in elektronischen Datenverarbeitungssystemen, 19 Inch-Gleichstromwandler für Serverschränke oder dergleichen, alle Arten von elektrischen und elektronischen Systemen, Lüfter und Klimaanlagen und dergleichen umfassen. Eine beispielhafte Anwendung der Erfindung sind Telekommunikationsanlagen, die all diese Bestandteile haben werden. Im Normalbetrieb, d.h. im Bereich I der Kennlinie der Figur 3, versorgen die Netzteile 92-98 mit im wesentlichen gleicher Stromabgabe die Verbraucher 100-112 und halten die Spannung der Batterien 114 auf einem gewünschten Niveau, z. B. 48-56 V, aufrecht. Wenn bei Inbetriebnahme oder aufgrund einer Störung, bei der Wartung oder dergleichen, der Spannungspegel der Batterien 114 sinkt, müssen die Schaltnetzteile 92-98 zusätzlich zur Versorgung der Verbraucher 100-112 die Batterien 114 nachladen, so daß der Ausgangsstrom der Schaltnetzteile 92-98 aufgrund der höheren Belastung steigen wird, so daß die Ausgangskennlinie der Schaltnetzteile in den Betriebsbereich II kommt. Nach dem vollständigen Laden der Batterie 114 wird die Stromentnahme in der Regel wieder abnehmen, so daß der Normalbetrieb im Betriebsbereich I wieder aufgenommen werden kann. Im Falle einer Fehlfunktion oder Störung, bei denen ein übermäßig großer Strom 10 > I0S gezogen wird, geht die Ausgangskennlinie der Schaltnetzteile 92-98 in den dritten Betriebsbereich III, was bei einem weiteren Ansteigen des Ausgangsstroms 10 dazu führt, daß die Schaltnetzteile 92-98 kurz geschlossen werden und keine Spannung mehr abgeben. Das in Figur 6 gezeigte System kann dann noch während einer begrenzten Zeit über die Batterien 114 versorgt werden, bevor es vollständig abschaltet, sofern nicht die Störung oder Fehlfunktion behoben wird.

Die in der vorstehenden Beschreibung mit den Ansprüchen der Zeichnung beschriebenen Merkmale können sowohl einzeln als auch in beliebiger Kombination für die Verwirklichung der Erfindung in ihren verschiedenen Ausführungsformen von Bedeutung sein.

Bezugszeichenliste

| | |
|---|---|
| 10, 11, 12 | Schaltnetzteile |
| 13 | Verbraucher |
| 20 | Schaltnetzteil |
| 22 | Schalter |
| 24 | Speicherkondensator |
| 26 | Ausgangs-Übertrager |
| 28 | Ausgangs/Freilaufdiode |
| 30 | LC-Schaltkreis |
| 32 | Lastwiderstand |
| 34, 35, 36, 37 | Gleichrichterdioden |
| 38 | Speicher- und Glättungsdrossel |
| 40 | Schalter |
| 42 | Ausgangs/Freilaufdiode |
| 44 | Speicherkondensator |
| 50 | erste Stufe |
| 51, 52, 53 | Widerstände |
| 54 | Operationsverstärker |
| 56 | Sperrdiode |
| 58 | Stromsenke |
| 60 | zweite Stufe |
| 61 | Schalter. |
| 62 | Übertrager |
| 63 | Zenerdiode |
| 64 | Kondensator |
| 65 | Widerstand |
| 68 | gesteuerter Schalter |
| 70 | dritte Stufe |
| 71 | Eingangsdiode |
| 72 | Kondensator |
| 73 | Widerstand |
| 74 | Verstärkungsschaltung |
| 75 | Ausgangsdiode |
| 80 | Pulsweitenmodulationsschaltung |
| 90 | Stromnetz |
| 92, 94, 96, 98 | Schaltnetzteile |
| 100-112 | Verbraucher |
| 114 | Batterie |

**Patentansprüche**

1. Stromversorgungseinrichtung mit mehreren parallel geschalteten Schaltnetzteilen zur Versorgung wenigstens eines Verbrauchers (32), wobei jedes Schaltnetzteil einen Ausgangsstrom $I_0$ und eine Ausgangsspannung $U_0(I_0, R_L)$ erzeugt, die abhängig ist von dem Ausgangsstrom $I_0$ und einem Lastwiderstand $R_L$, und mit einer Ansteuervorrichtung für jedes Schaltnetzteil, **dadurch gekennzeichnet, daß** die Ansteuervorrichtung eine erste Stufe (50) mit einem P-Glied (54) aufweist, das eine P-Glied-Eingangsspannung empfängt, die von der Ausgangsspannung $U_0(I_0, R_L)$ abgeleitet ist, und eine P-Glied-Steuerspannung $U_{vs}$ erzeugt, die zur Ansteuerung des jeweiligen Schaltnetzteils dient, wobei die erste Stufe aktiv ist, wenn $0 \leq I_0 \leq I_{0P}$,
eine zweite Stufe (60) mit einer Stromabbildungsschaltung aufweist, die den Ausgangsstrom $I_0$ des jeweiligen Schaltnetzteils nachbildet und eine Ausgangsstrom-Steuerspannung $U_P$ erzeugt, die zur Ansteuerung des jeweiligen Schaltnetzteils dient, wobei die zweite Stufe aktiv ist, wenn $I_{0P} \leq I_0 \leq I_{0S}$, und
eine dritte Stufe (70) mit einer Verstärkerschaltung (74) aufweist, die ein zum Ausgangsstrom $I_0$ proportionales Signal verstärkt und eine verstärkte Ausgangsstrom-Steuerspannung $m \cdot U_S$ erzeugt, die zur Ansteuerung des jeweiligen Schaltnetzteils dient, wobei die dritte Stufe aktiv ist, wenn $I_{0S} \leq I_0 \leq I_K$.

2. Stromversorgungseinrichtung nach Anspruch 1, **dadurch gekennzeichnet, daß** die zweite Stufe auch aktiv ist, wenn $I_{0S} \leq I_0$.

3. Stromversorgungseinrichtung nach Anspruch 1 oder 2, **dadurch gekennzeichnet, daß** $I_{0P}$ ein er-

ster Grenzwert des Ausgangsstroms $I_0$ ist, welcher die Grenze eines Normalbetriebsbereichs kennzeichnet; $I_{0S}$ ein zweiter Grenzwert des Ausgangsstroms $I_S$ ist, welcher die Grenze eines Arbeitsbereichs mit hoher Belastung kennzeichnet; und $I_K$ einen Kurzschlußstromwert kennzeichnet.

4.  Stromversorgungseinrichtung nach einem der vorangehenden Ansprüche, **dadurch gekennzeichnet, daß** die Ansteuervorrichtung eine Pulsweitenmodulationsschaltung (80) aufweist, welche die P-Glied-Steuerspannung $U_{vs}$, die Ausgangsstrom-Steuerspannung $U_P$ und die verstärkte Ausgangsstrom-Steuerspannung $U_S$ empfängt und abhängig davon ein Steuersignal $U_T$ für das jeweilige Schaltnetzteil erzeugt.

5.  Stromversorgungseinrichtung nach einem der vorangehenden Ansprüche, **dadurch gekennzeichnet, daß** die erste Stufe (50) einen Spannungsteiler (51, 52, 53) aufweist, der eine zur Ausgangsspannung $U_0$ proportionale P-Glied-Eingangsspannung erzeugt.

6.  Stromversorgungseinrichtung nach Anspruch 5, **dadurch gekennzeichnet, daß** das P-Glied (54) der ersten Stufe (50) einen Operationsverstärker aufweist, dessen einer Eingang die P-Glied-Eingangsspannung empfängt und dessen anderer Eingang eine erste Bezugsspannung $U_{REF1}$ empfängt und dessen Ausgang die P-Glied-Steuerspannung $U_{vs}$ abgibt.

7.  Stromversorgungseinrichtung nach Anspruch 4 und 6, **dadurch gekennzeichnet, daß** der Operationsverstärker (54) über eine Sperrdiode (36) mit der Pulsweitenmodulationsschaltung (80) verbunden ist.

8.  Stromversorgungseinrichtung nach einem der vorangehenden Ansprüche, **dadurch gekennzeichnet, daß** die zweite Stufe (60) ein Übertragerelement (62) aufweist, das zu einem Haupt-Übertragerelement (26) des jeweiligen Schaltnetzteils parallel geschaltet ist und ein Ausgangssignal erzeugt, das proportional zu dem Ausgangsstrom $I_0$ des Schaltnetzteils ist.

9.  Stromversorgungseinrichtung nach Anspruch 8, **dadurch gekennzeichnet, daß** dem Übertragerelement (62) eine Zenerdiode (63) und ein RC-Schaltkreis (64, 65) nachgeschaltet sind, welche die Ausgangsstrom-Steuerspannung $U_P$ abhängig von dem Übertrager-Ausgangssignal erzeugen, wenn $I_0 \geq I_{0P}$, wobei $U_P$ proportional zu $I_0$ ist.

10. Stromversorgungseinrichtung nach einem der vorangehenden Ansprüche, **dadurch gekennzeich-**

**net, daß** die dritte Stufe (70) der zweiten Stufe (60) nachgeschaltet ist und die Ausgangsstrom-Steuerspannung $U_P$, die zu dem Ausgangsstrom $I_0$ des Schaltnetzteils proportional ist, das Eingangssignal der dritten Stufe (70) bildet.

11. Stromversorgungseinrichtung nach einem der Ansprüche 1 bis 9, **dadurch gekennzeichnet, daß** die dritte Stufe (70) zur zweiten Stufe (60) parallel geschaltet ist und eine weitere Stromabbildungsschaltung aufweist, die den Ausgangsstrom $I_0$ des Schaltnetzteils nachbildet.

12. Stromversorgungseinrichtung nach Anspruch 10 oder 11, **dadurch gekennzeichnet, daß** die dritte Stufe (70) eine Verstärkerschaltung (74) aufweist, deren einer Eingang über einen weiteren RC-Schaltkreis (72, 73) mit der Stromabbildungsschaltung verbunden ist und deren anderer Eingang mit einer dritten Bezugsspannung $U_{REF3}$ verbunden ist und deren Ausgang die verstärkte Ausgangsstrom-Steuerspannung mUs abgibt.

13. Stromversorgungseinrichtung nach Anspruch 12, **dadurch gekennzeichnet, daß** die Verstärkerschaltung (74) der dritten Stufe (70) so ausgelegt ist, daß sie einen hohen Verstärkungsfaktor, $m \gg 1$, hat.

**Claims**

1.  A power supply device having several switch-mode power supplies connected in parallel to supply at least one load (32), each switch-mode power supply generating an output current $I_0$ and an output voltage $U_0(I_0, R_L)$ that is a function of the output current $I_0$ and a load resistance $R_L$, and having a control device for each switch-mode power supply, **characterized in that** the control device

    has a first stage (50) having a P element (54) that receives a P element input voltage which is derived from the output voltage $U_0(I_0, R_L)$, and generates a P element control voltage $U_{VS}$, that is used to control the respective switch-mode power supply, the first stage being active when $0 \leq I_0 \leq I_{0P}$,
    a second stage (60) having a current imaging circuit which reproduces the output current $I_0$ of the respective switch-mode power supply and generates an output current control voltage Up which is used to control the respective switch-mode power supply, the second stage being active when $I_{0P} \leq I_0 \leq I_{0S}$, and
    a third stage (70) having an amplifier circuit (74) which amplifies a signal proportional to the output current $I_0$ and generates an amplified output current control voltage $m \cdot U_S$ which is used to control the respective switch-mode power supply, the third stage being active when $I_{0S} \leq I_0 \leq I_K$.

**2.** A power supply device according to claim 1, **characterized in that** the second stage is also active when $I_{0S} \leq I_0$.

**3.** A power supply device according to claim 1 or 2, **characterized in that** $I_{0P}$ is a first threshold value of the output current $I_0$ which characterizes the limit of a normal operating range; $I_{0S}$ is a second threshold value of the output current $I_0$ which characterizes the limit of an operating range with a heavier load; and $I_K$ characterizes a short circuit current limitation.

**4.** A power supply device according to one of the above claims, **characterized in that** the control device has a pulse width modulation circuit (80) which receives the P element control voltage $U_{VS}$, the output current control voltage Up and the amplified output current control voltage $U_S$ and generates a control signal $U_T$ for the respective switch-mode power supply in response thereto.

**5.** A power supply device according to one of the above claims, **characterized in that** the first stage (50) has a voltage divider (51, 52, 53) that generates a P element input voltage proportional to the output voltage $U_0$.

**6.** A power supply device according to claim 5, **characterized in that** the P element (54) of the first stage (50) has an operational amplifier, one of whose inputs receives the P element input voltage and whose other input receives a first reference voltage $U_{REF1}$ and whose output emits the P element control voltage $U_{VS}$.

**7.** A power supply device according to claim 4 and 6, **characterized in that** the operational amplifier (54) is connected to the pulse width modulation circuit (80) via a blocking diode (36).

**8.** A power supply device according to one of the above claims, **characterized in that** the second stage (60) has a transformer element (62) that is connected in parallel to the main transformer element (26) of the respective switch-mode power supply and generates an output signal that is proportional to the output current $I_0$ of the switch-mode power supply.

**9.** A power supply device according to claim 8, **characterized in that** downstream from the transformer element (62), a zener diode (63) and an RC circuit (64, 65) are connected which generate the output current control voltage Up as a function of the transformer output signal when $I_0 \geq I_{0P}$, Up being proportional to $I_0$.

**10.** A power supply device according to one of the above claims, **characterized in that** the third stage (70) is connected downstream from the second stage (60) and the output current control voltage Up, which is proportional to the output current $I_0$ of the switch-mode power supply, forms the input signal of the third stage (70).

**11.** A power supply device according to one of the claims 1 to 9, **characterized in that** the third stage (70) is connected in parallel to the second stage (60) and has a further current imaging circuit which reproduces the output current $I_0$ of the switch-mode power supply.

**12.** A power supply device according to claim 10 or 11, **characterized in that** the third stage (70) has an amplifier circuit (74) one of whose inputs is connected to the current imaging circuit via a further RC circuit (72, 73) and whose other input is connected to the reference voltage $U_{REF3}$ and whose output emits the amplified output current control voltage mUs.

**13.** A power supply device according to claim 12, **characterized in that** the amplifier circuit (74) of the third stage (70) is designed in such a way that it has a high amplification factor m >> 1,.

**Revendications**

**1.** Dispositif d'alimentation en courant avec plusieurs éléments de réseau de distribution montés en parallèle pour l'alimentation d'au moins un récepteur (32), chaque élément de réseau de distribution générant un courant de sortie $I_0$ et une tension de sortie $U_0$ ($I_0$, $R_L$), laquelle dépend du courant de sortie $I_0$ et d'une résistance de charge $R_L$ et avec un dispositif de commande pour chaque élément de réseau de distribution, **caractérisé en ce que** le dispositif de commande présente un premier étage (50) avec un réseau en P (54), lequel réceptionne une tension d'entrée de réseau en P, laquelle est dérivée de la tension de sortie $U_0(I_0$, $R_L)$, et génère une tension de commande de réseau en P $U_{vs}$, laquelle sert à la commande de l'élément de réseau de distribution respectif, le premier étage étant actif lorsque $0 \leq I_0 \leq I_{0P}$,

**en ce qu'**il présente un deuxième étage (60) avec un circuit de reproduction de courant, lequel reproduit le courant de sortie $I_0$ de l'élément de réseau de distribution respectif et génère une tension de commande de courant de sortie $U_P$, laquelle sert à la commande de l'élément de réseau de distribution respectif, le deuxième étage étant actif lorsque $I_{0P} \leq I_0 \leq I_{0S}$, et

**en ce qu'**il présente un troisième étage (70) avec un circuit amplificateur (74), lequel amplifie un signal proportionnel au courant de sortie $I_0$ et génère une tension de commande de courant de sortie m-$U_S$

servant à la commande de l'élément de réseau de distribution respectif, le troisième étage étant actif lorsque $L_{0S} \leq I_0 \leq I_K$.

2. Dispositif d'alimentation en courant selon la revendication 1, **caractérisé en ce que** le deuxième étage est également actif, lorsque $I_{0S} \leq I_0$.

3. Dispositif d'alimentation en courant selon la revendication 1 ou 2, **caractérisé en ce que** $I_{0P}$ est une première valeur limite du courant de sortie $I_0$, laquelle indique la limite d'une plage de fonctionnement normal ; $I_{0S}$ étant une deuxième valeur limite du courant de sortie $I_0$, laquelle indique la limite d'une plage d'opération à forte sollicitation ; et $I_K$ indiquant une valeur de courant de court-circuit.

4. Dispositif d'alimentation en courant selon l'une quelconque des revendications précédentes, **caractérisé en ce que** le dispositif de commande présente un circuit de modulation des impulsions en largeur (80), lequel réceptionne la tension de commande du réseau en P $U_{vs}$, la tension de commande du courant de sortie $U_P$ et la tension de commande du courant de sortie $U_S$ amplifiée, et lequel génère en fonction de cela un signal de commande $U_T$ pour l'élément de réseau de distribution respectif.

5. Dispositif d'alimentation en courant selon l'une quelconque des revendications précédentes, **caractérisé en ce que** le premier étage (50) présente un diviseur de tension (51, 52, 53), lequel génère une tension d'entrée de réseau en P proportionnelle à la tension de sortie $U_0$.

6. Dispositif d'alimentation en courant selon la revendication 5, **caractérisé en ce que** le réseau en P (54) du premier étage (50) présente un amplificateur opérationnel, dont l'une des entrées réceptionne la tension d'entrée du réseau en P et dont l'autre entrée réceptionne une première tension de référence $U_{REF1}$ et dont la sortie délivre la tension de commande de réseau en P $U_{VS}$.

7. Dispositif d'alimentation en courant selon les revendications 4 et 6, **caractérisé en ce que** l'amplificateur opérationnel (54) est relié par l'intermédiaire d'une diode de verrouillage (36) au circuit de modulation des impulsions en largeur (80).

8. Dispositif d'alimentation en courant selon l'une quelconque des revendications précédentes, **caractérisé en ce que** le deuxième étage (60) présente un élément de transformateur (62), lequel est monté parallèlement à une élément de transformateur principal (26) de l'élément de réseau de distribution respectif et lequel génère un signal de sortie, lequel est proportionnel au courant de sortie $I_0$ de l'élément de réseau de distribution.

9. Dispositif d'alimentation en courant selon la revendication 8, **caractérisé en ce que** l'on place, en aval de l'élément de transformateur (62), une diode de Zener (63) et un circuit de commutation RC (64, 65), lesquels génèrent la tension de commande du courant de sortie $U_P$ en fonction du signal de sortie du transformateur, lorsque $I_0 \geq I_{0P}$, $U_P$ étant proportionnel à $I_0$.

10. Dispositif d'alimentation en courant selon l'une quelconque des revendications précédentes, **caractérisé en ce que** le troisième étage (70) est placé en aval du deuxième étage (60) et **en ce que** la tension de commande du courant de sortie $U_P$, laquelle est proportionnelle au courant de sortie $I_0$ de l'élément de réseau de distribution, forme le signal d'entrée du troisième étage (70).

11. Dispositif d'alimentation en courant selon l'une quelconque des revendications 1 à 9, **caractérisé en ce que** le troisième étage (70) est monté parallèlement au deuxième étage (60) et présente un autre circuit de reproduction de courant, lequel reproduit le courant de sortie $I_0$ de l'élément de réseau de distribution.

12. Dispositif d'alimentation en courant selon la revendication 10 ou 11, **caractérisé en ce que** le troisième étage (70) présente un circuit amplificateur (74), dont l'une des entrées est reliée via un autre circuit de commutation RC (72, 73) au circuit de reproduction de courant et dont l'autre entrée est reliée à une troisième tension de référence $U_{REF3}$ et dont la sortie reproduit la tension de commande du courant de sortie mUs amplifiée.

13. Dispositif d'alimentation en courant selon la revendication 12, **caractérisé en ce que** le circuit amplificateur (74) du troisième étage (70) est étudié de manière à présenter un facteur d'amplification élevé m >> 1.

# FIG.1
## (STAND DER TECHNIK)

KENNLINIEN ("WEICHE KENNLINIEN") VON n PARALLELGESCHALTETEN
SCHALTNETZTEILEN

# FIG.2
## (STAND DER TECHNIK)

SYMMETRISCHE VERKABELUNG IST EINE VORAUSSETZUNG FÜR DIE
PARALLELSCHALTUNG VON SCHALTNETZTEILEN

*FIG.3*

*FIG.4*

EP 1 488 499 B1

# FIG.5

(STAND DER TECHNIK)

**FIG.6**

90Vac-230Vac ⋯ AC-DISTRIBUTION + EM + FILTER ⟋90

RECTIFIER MODULE 1 ⟋92
RECTIFIER MODULE 2 ⟋94
RECTIFIER MODULE 3 ⟋96
$300W < P_{out} < 2kW$
RECTIFIER MODULE n ⟋98
⋯

⟋100 μP-CARDS TELKOM. CARDS, ⋯

⟋102 ON-BOARD DC/DC

$48V_{DC} ⋯ 56V_{DC}$

⟋104 19" DC/DC CONVERTER

⟋106 μP-CARDS, TELCOM. CARDS, ⋯

$10W < P_{out} < 100W$

⟋112 ⋯

⟋114 BATTERIES

$100W < P_{out} < 3kW$

108⟍ SYSTEM FAN CONTROLLER, HEAT MANAGEMENT

110⟍ FAN-TRAYS, FANS

EP 1 488 499 B1

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 949739 A2

- DE 10019329

**In der Beschreibung aufgeführte Nicht-Patentliteratur**

- *Elektronik,* 2000, vol. 13, 114-118